# EUROPEAN PATENT SPECIFICATION

(11) **EP 2 107 784 B1**
(45) Date of publication and mention of the grant of the patent: **03.01.2018**
(21) Application number: 09250666.6
(22) Date of filing: 10.03.2009
(51) Int. Cl.: H04N 1/04

(54) **Image data generating device**
Bilddatenerstellungsvorrichtung
Dispositif de génération de données d'image

(30) Priority: 31.03.2008 JP 2008089614
(43) Date of publication of application: 07.10.2009
(73) Proprietor: Brother Kogyo Kabushiki Kaisha, Nagoya-shi, Aichi 467-8561 (JP)
(72) Inventor: Otsuka, Naoki, Nagoya-shi, Aichi 467-8562 (JP)
(74) Representative: J A Kemp

(56) References cited:
- EP-A2- 0 591 974
- JP-A- 2001 245 133
- US-A1- 2004 146 218
- US-A1- 2004 169 870
- US-A1- 2007 070 445
- US-B1- 6 671 421

## Description

The invention relates to a device for generating image data.

There has been proposed a device for generating image data pertaining to a document. For example, JP-A-2006-333162 discloses a related art image data generating device having a transparent plate on which a document is to be placed; an illumination device that emits light toward the document; a first mirror that subjects light reflected from the document to additional reflection; a second mirror that further subjects the light reflected from the first mirror to reflection; and one area image sensor on which the light reflected from the second mirror is incident. The area image sensor is made by a two-dimensional arrangement of a plurality of imaging elements and has been widely used in the field of a digital camera, and the like. The related art image data generating device has the two mirrors inserted between the transparent plate and the area image sensor. According to the related art image data generating device described above, an optical distance between the document and the area image sensor can be increased while a physical distance between the document and the area image sensor is reduced. Therefore, the related art image data generating device can generate image data by photographing a large-size document in spite of its compact device size.

US 6,671,421 considers art in which an image reading apparatus provided in a copy machine or the like is provided with line image sensors structured such that photo-electric conversion elements such as a charge couple device or the like are arranged in a line in a main scanning direction, and reads an image in accordance with a scanning operation. It indicates that a sensor which can correspond to a paper having a A3 size has spread, but it has been impossible to manufacture a line image sensor having a size more than the above. It notes that, in an apparatus of the type treating the large paper such as the A0 size or the like, there has been employed a method of reading an image by arranging two line image sensors in a line in a main scanning direction (a direction vertically crossing a paper supply direction and coinciding with a width direction of a paper) and combining the scanning operations of these line image sensors. This type of image reading is described, for example, in Japanese Patent Unexamined Publication No. 62-101170. US 2004/0146218 describes a document scanning method comprising causing relative movement between a document and first and second imaging elements, such that each of a succession of scan lines of the document is exposed in turn to the imaging elements; generating first and second image data words representative of overlapping portions of each scan line; and concatenating at least a portion of the words to generate a third word representative of the scan line, the method being characterised by the steps of cross-correlating at least a portion of each of the words to identify a portion of the second word that is included in the first word; discarding a portion of at least one of words; concatenating the first word or remainder thereof with the second word or remainder thereof to form the third word; and, if necessary, compressing or expanding the third word by linear interpolation so as to obtain a word of a predetermined length.

However, the related art image data generating device of JP-A-2006-333162 having the area image sensor has some disadvantages. For example, the related art image data generating device utilizes a style in which light reflected from the document is further subjected to reflection on the mirrors. In this style, the light is forced to sustain the influence of distortion of the mirrors, and the like. Thus, the quality of image data may be degraded. For this reason, it may be adopted a style for directly photographing a document without utilization of mirrors. However, such a configuration may entail a necessity for increasing the physical distance between the document and the area image sensor. Thus, a size of a device adopting such a configuration may be increased.

Illustrative aspects of the invention provide an image data generating device that can generate high quality image data with reducing a size thereof.

A technique disclosed in the invention relates to an image data generating device that generates image data pertaining to a target. The image data generating device includes a transparent plate, a light radiation unit, a plurality of digital camera units, and a photography data composition unit. The word "target" may be, for example, a paper medium such as a document or an object other than the paper medium.

According to an illustrative aspect of the invention, there is provided an image data generating device as defined in appended claim 1.

Incidentally, the expression "directly enters" signifies that a light reflection unit, such as a mirror, is not interposed between the transparent plate (the target) and the digital camera unit. The plurality of digital camera units may also have photography ranges of the same size or photography ranges of different sizes.

Two adjacent digital camera units generate partially-overlapping photography data. For example, when only two digital camera units are present, one digital camera unit and the other digital camera unit adjoin each other and generate partially-overlapping photography data. For example, when three digital camera units are arranged straight, digital camera units disposed at respective ends are not adjacent to each other, and the digital camera unit disposed at one end and the center digital camera unit are adjacent to each other. Further, the center digital camera unit and the digital camera unit disposed at the other end are adjacent to each other. Further, for example, when four digital camera units are placed in such a positional relationship as to form respective apexes of a rectangle, each of the four digital camera units become adjacent to the other three digital camera units. The
expression "two adjacent digital camera units generate partially-overlapping photography data" can also be translated into an expression "when there is a target placed over an entire exposed portion of the transparent plate, the plurality of digital camera units can photograph the target without formation of clearance in association with each other."

The photography data composition unit generates image data pertaining to the target by combination of a plurality of sets of photography data generated by the plurality of digital camera units. Namely, the photography data composition unit combines a plurality of sets of partially-overlapping photography data, to thus generate a single set of image data pertaining to the target.

According to the illustrative aspect of the invention, the plurality of digital camera units directly photograph the target without involvement of a mirror, and the like. Therefore, high-quality image data can be generated. Moreover, since the plurality of digital camera units are offset from each other, the plurality of digital camera units photograph different photography ranges. Specifically, in the image data generating device, the plurality of digital camera units photograph the entirety of the target in association with each other. Since one digital camera unit does not photograph the entirety of the target, distances (focal lengths) between the target and the plurality of digital camera units can be reduced. Consequently, a compact device size can be achieved. The image data generating device can generate high-quality image data in a compact device size.

### BRIEF DESCRIPTION OF THE DRAWINGS

Fig. 1 shows a perspective view of a multi-function device according to an exemplary embodiment of the invention, showing a state where a cover of the multi-function device is closed;
Fig. 2 shows the perspective view of the multi-function device showing a state where the cover is opened;
Fig. 3 shows a plan view of a transparent plate of the multi-function device;
Fig. 4 is a diagram showing a configuration of the multi-function device;
Fig. 5 shows a front view of the transparent plate as viewed in the direction of arrow V in Fig. 3;
Fig. 6 shows a flowchart of A3-A3 mode processing;

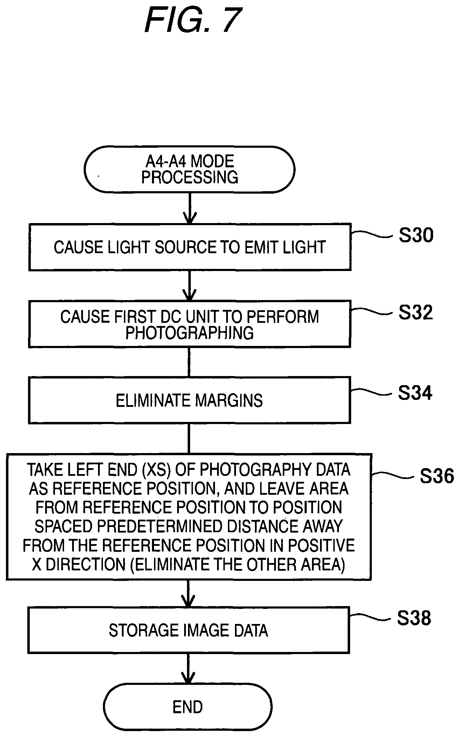

Fig. 7 shows a flowchart of A4-A4 mode processing;
Fig. 8 shows a flowchart of A3-A3x2 mode processing;
Fig. 9 shows views for describing correspondences between modes and image data generated by respective modes; and
Fig. 10 shows a view for describing a modified exemplary embodiment.

### DETAILED DESCRIPTION

Exemplary embodiments of the invention will now be described with reference to the drawings.

Incidentally, some of technical features described in connection with the exemplary embodiments of the invention will be summarized as following examples.

(Example 1) A plurality of digital camera units may also be two digital camera units. A transparent plate may assume a rectangular shape. One digital camera unit may also be placed at a position close to one side with respect to an intermediate position in a long side of the transparent plate. The other digital camera unit may also be placed at a position close to the other side with respect to the intermediate position in the long side of the transparent plate.

(Example 2) One digital camera unit and the other digital camera unit may also be placed at the same location in the direction of a short side of the transparent plate. Further, the one digital camera unit and the other digital camera unit may also be positioned at the same distance from the transparent plate. One digital camera unit and the other digital camera unit each may have a photographable range of the same size.

(Example 3) When a plane in which the transparent plate extends is viewed from the vertical direction, each of the plurality of digital camera units may also be positioned at the center of the photographable range of each digital camera unit.

(Example 4) Each of the plurality of digital camera unit may also have an optical system on which light reflected from a target is directly incident and which generates an image of the target from the incident light, and an area image sensor that converts the image generated by the optical system into an electrical signal and generates photography data.

(Example 5) The plurality of digital camera units may simultaneously generate photography data in response to single radiation of light performed by a light emission unit.

(Example 6) An image data generating device may further be added with an output unit that outputs image data generated by a photography data composition unit. The word "output" includes printing, displaying, transmission of data to another device, and the like.

(Example 7) When image data pertaining to a target falling within a photographable range of one digital camera unit are to be generated, the image data generating device stores only photography data captured by the digital camera unit in predetermined memory. Image data pertaining to the target are generated solely from the photography data. In order to implement the configuration, the image data generating device activates only the one digital camera unit and does not need to start the other digital camera unit.

(Example 8) The image data generating device may further have a cover member for covering a first surface of the transparent plate. A transparent-plate-side surface of the cover member may also assume a predetermined color. The first image data generation unit may also localize one short side of the rectangular target of a predetermined size by determining a boundary between the predetermined color and a color other than the predetermined color from the photography data generated by one digital camera unit. The second image data generation unit may localize another short side of the rectangular object of a predetermined size by determining a boundary between the predetermined color and a color other than the predetermined color from the photography data generated by the other digital camera unit.

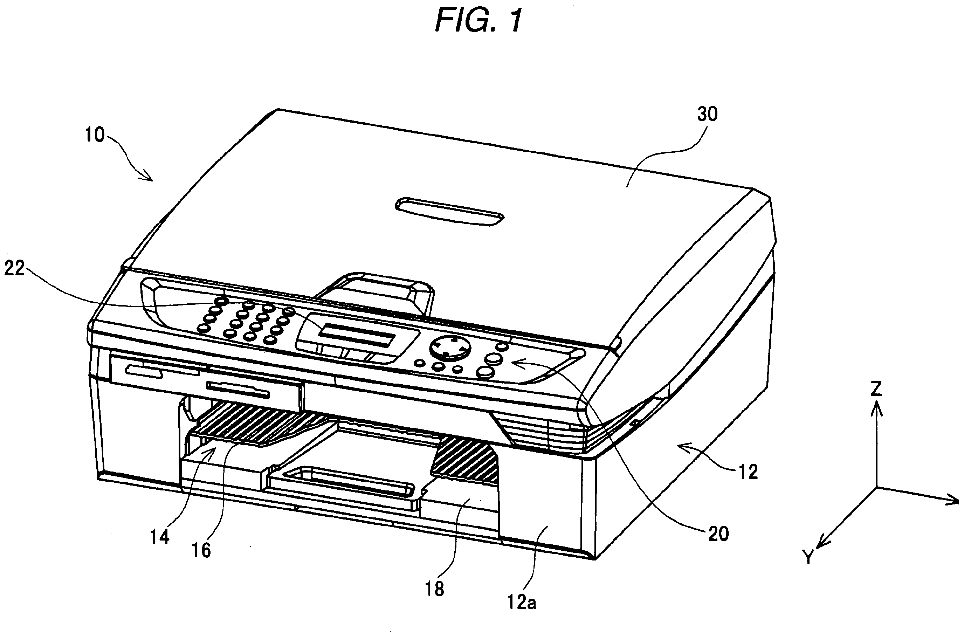

Fig. 1 shows an external configuration of a multi-function device 10 (one example of an image data generating device) according to the exemplary embodiment of the invention. In the exemplary embodiment, a right-left direction of the multi-function device 10 is taken as an X direction; a depthwise direction of the multi-function device 10 is taken as a Y direction; and a heightwise direction of the multi-function device 10 is taken as a Z direction. Moreover, the directions of arrows in the drawings are described as positive directions. For example, the rightward direction of the multi-function device 10 is a positive X direction, and the leftward direction of the same is a negative X direction. The multi-function device 10 has a print function, an image data generation function, a copying function, and the like.

### (External Configuration of Multi-function Device)

The multi-function device 10 includes a casing 12; trays 16 and 18; an operation section 20 (one example of a mode selection unit) ; a display section 22; a cover 30; a transparent plate 32; and the like. An opening 14 is formed in a front surface 12a of the casing 12. The trays 16 and 18 are inserted into the casing 12 from the opening 14. The tray 18 is a sheet feeding tray for holding a yet-to-be-printed print medium. The tray 16 is a sheet discharge tray for holding a printed print medium. The operation section 20 and the display section 22 are arranged in an upper portion of the casing 12. The operation section 20 has a plurality of keys. The user can input various instructions and information to the multi-function device 10 by operating the operation section 20. The display section 22 can display various information items. The cover 30 is connected to the casing 12 by way of, for example, a hinge. Fig. 1 shows a state in which the cover 30 is closed.

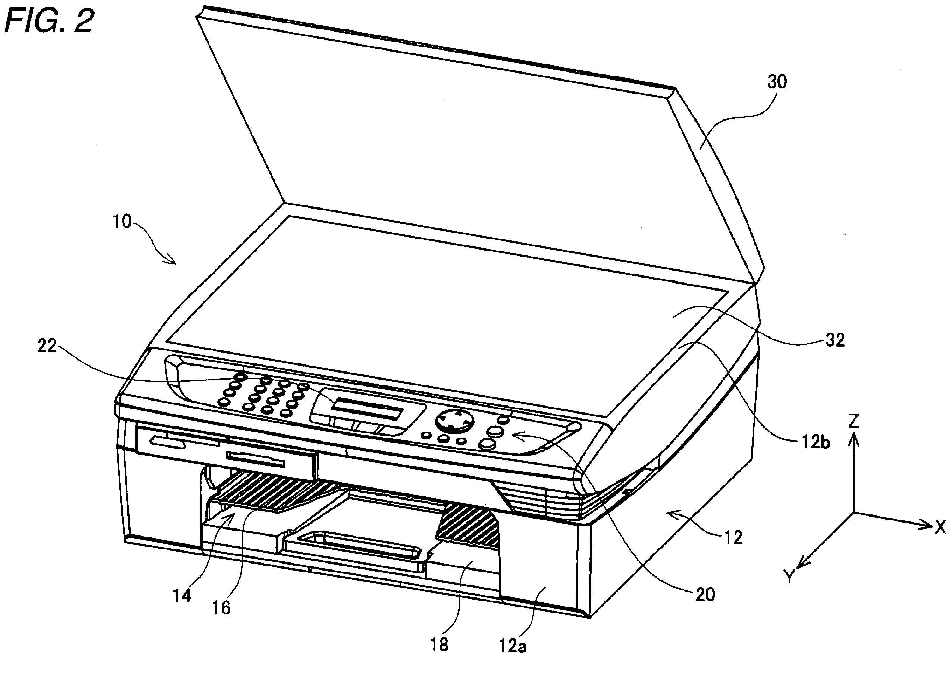

Fig. 2 shows a state where the cover 30 is opened. When the cover 30 is opened, a transparent plate 32 becomes exposed. The transparent plate 32 is attached to a frame 12b formed in an upper portion of the casing 12. The transparent plate 32 has a rectangular shape elongated in the X direction. An exposed portion of the transparent plate 32 has an A3-size. Namely, an opening of the frame 12b has an A3-size. The cover 30 is larger than the transparent plate 32 and can cover the entire transparent plate 32.

### (Transparent Plate and Digital Camera Units)

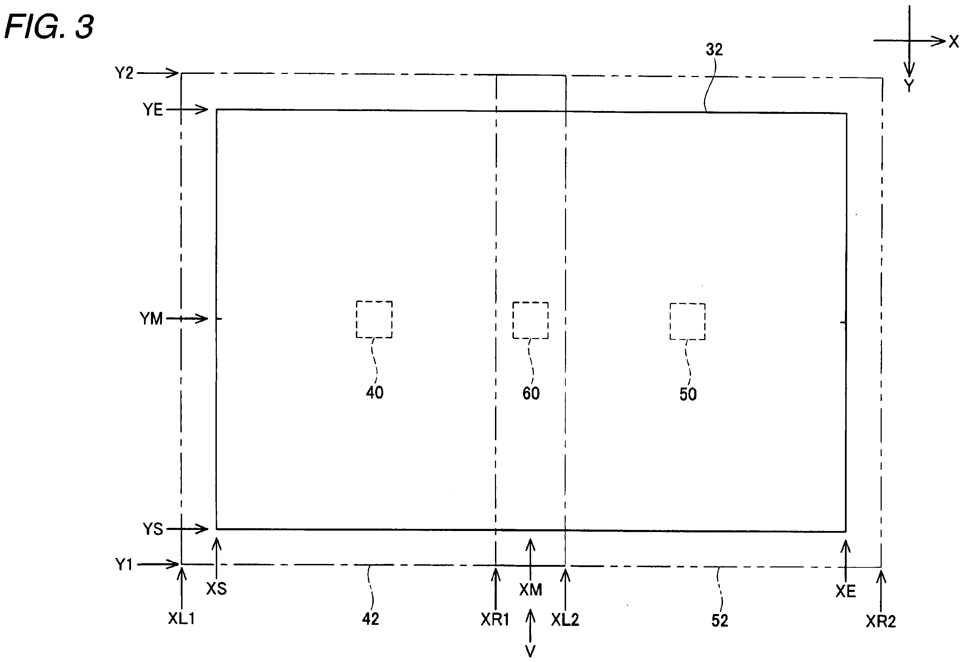

Fig. 3 is a plan view of the transparent plate 32. An area indicated by a solid line in Fig. 3 is an exposed portion of the transparent plate 32. In the following descriptions, the area indicated by a solid line in Fig. 3 is not described as an exposed portion of the transparent plate 32 but simply as a "transparent plate 32." Reference symbol XS designates an X coordinate of a left end (a left short side) of the transparent plate 32. Reference symbol XE designates an X coordinate of a right end (a right short side) of the transparent plate 32. Reference symbol XM designates an X coordinate of an intermediate position between XS and XE. Reference symbol YS designates a Y coordinate of a proximal-side edge (a long side on a proximal side) of the transparent plate 32. Reference symbol YE designates a Y coordinate of a distal-side edge (a long side on a distal side) of the transparent plate 32. Reference symbol YM designates a Y coordinate of an intermediate position between YS and YE.

The multi-function device 10 has digital camera units 40 and 50. In the following descriptions, the digital camera unit 40 is called a first DC unit 40, and the digital camera unit 50 is called a second DC unit 50. The first DC unit 40 and the second DC unit 50 are disposed below the transparent plate 32. When the transparent plate 32 is viewed from above (Fig. 3), the first DC unit 40 and the second DC unit 50 overlap the transparent plate 32. Moreover, when the transparent plate 32 is viewed from above, the first DC unit 40 and the second DC unit 50 are offset from each other. More specifically, the first DC unit 40 and the second DC unit 50 are offset in the X direction. The first DC unit 40 is placed leftward with respect to an intermediate position XM of the long side of the transparent plate 32. More specifically, the first DC unit 40 is placed at an intermediate position between XM and XS. The second DC unit 50 is placed rightward with respect to the intermediate position XM of the long side of the transparent plate 32. More specifically, the second DC unit 50 is placed at an intermediate position between XM and XE.

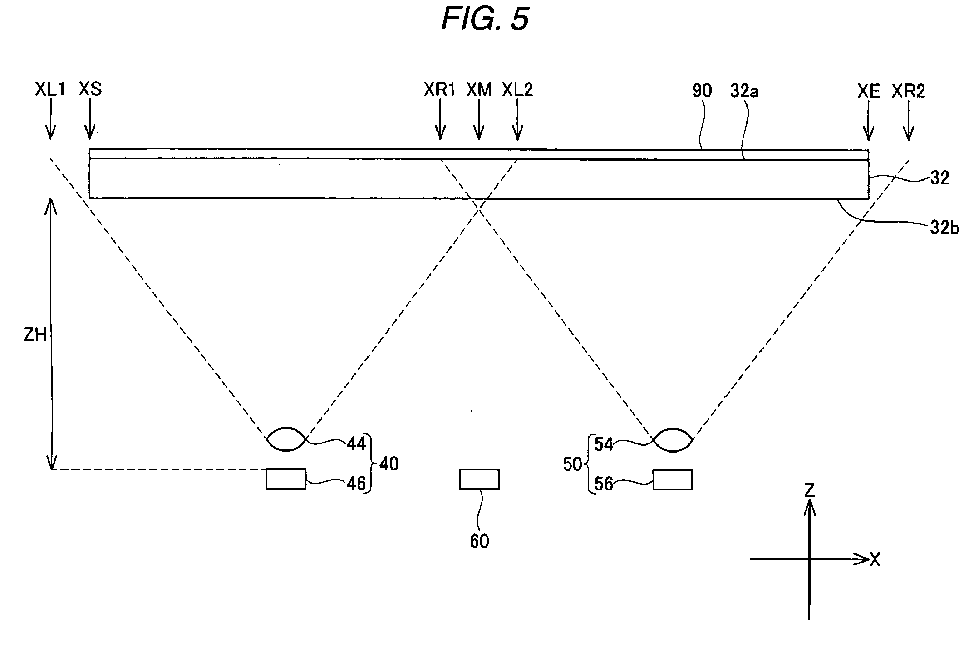

In the Y direction, the first DC unit 40 and the second DC unit 50 are placed at the same position. More specifically, the first DC unit 40 and the second DC unit 50 are placed at an intermediate position YM between YS and YE. Even in the Z direction (the heightwise direction), the first DC unit 40 and the second DC unit 50 are placed at the same position. The arrangement will be described by reference to Fig. 5.

Fig. 5 shows a view acquired when the transparent plate is viewed in an arrow V direction shown in Fig. 3, specifically, a front view of the transparent plate 32 and the respective DC units 40 and 50. As shown in Fig. 5, a distance between the transparent plate 32 and the first DC unit 40 is equal to a distance between the transparent plate 32 and the second DC unit 50 (a distance ZH). The transparent plate 32 has a predetermined thickness and a front surface 32a and a back surface 32b. The first DC unit 40 and the second DC unit 50 are disposed on the back-surface-32b side of the transparent plate 32.

The first DC unit 40 and the second DC unit 50 generate photography data by photographing a target (e.g., a document) placed on the transparent plate 32. An area 42 enclosed by a dashed line in Fig. 3 is a photographable range of the first DC unit 40. As is obvious from Fig. 3, the photographable range 42 extends to the outside beyond the transparent plate 32. More specifically, the photographable range 42 extends toward the proximal side beyond YS; extends toward the distal side beyond YE; and extends toward the left beyond XS. Further, the photographable range 42 extends toward the right beyond XM. The first DC unit 40 lies at the center of the photographable range 42. An area 52 enclosed by a two-dot chain line is a photographable range of the second DC unit 50. The photographable range 52 is identical in size with the photographable range 42. The photographable range 52 extends to the outside beyond the transparent plate 32. More specifically, the photographable range 52 extends toward the proximal side beyond YS; extends toward the distal side beyond YE; and extends toward the right beyond XE. Moreover, the photographable range 52 extends toward the left beyond XM. The second DC unit 50 lies at the center of the photographable range 52.

Reference symbol Y1 designates a Y coordinate of proximal-side edges of the two photographable ranges 42 and 52. Reference symbol Y2 designates a Y coordinate of distal-side edges of the two photographable ranges 42 and 52. Reference symbol XL1 designates an X coordinate of a left-side edge of the photographable range 42. Reference symbol XL2 designates an X coordinate of a right-side edge of the photographable range 42. Reference symbol XR1 designates an X coordinate of a left-side edge of the photographable range 52. Reference symbol XR2 designates an X coordinate of a right-side edge of the photographable range 52. A partial overlap exists between the photographable range 42 and the photographable range 52. More specifically, an overlap exists between the photographable range 42 and the photographable range 52 in the X direction.

### (Overall Configuration of Multi-Function Device)

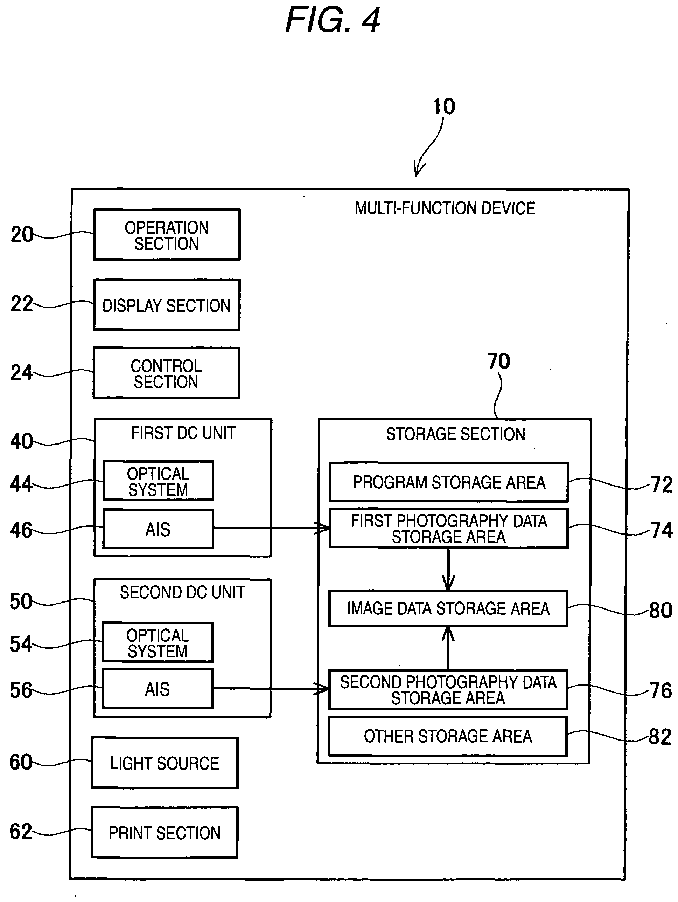

Fig. 4 briefly shows the configuration of the multi-function device 10. In addition to including the foregoing devices 20, 22, 40, and 50, the multi-function device 10 includes a control section 24 (one example of a photography data composition unit, a first image data generation unit, a second image data generation unit and a size enlargement unit), a light source 60 (one example of a light radiation unit), a print section 62, and a storage section 70. In accordance with a program stored in the storage section 70, the control section 24 controls the respective devices of the multi-function device 10 in a centralized fashion. Specifics of processing performed by the control section 24 will be described in detail later. The light source 60 is disposed below the transparent plate 32 (see Fig. 5). As is evident from Fig. 3, the light source 60 is interposed between the first DC unit 40 and the second DC unit 50. The light source 60 is disposed at the center of the transparent plate 32. The light source 60 can emit light upwardly (toward the back surface 32b of the transparent plate 32). The print section 62 has a mechanism for carrying a print medium from the sheet feeding tray 18 to the sheet discharge tray 16 and a print mechanism for subjecting a print medium to printing.

The storage section 70 is made up of ROM, EEPROM, RAM, and the like. The storage section 70 has a program storage area 72, a first photography data storage area 74, a second photography data storage area 76, an image data storage area 80, another storage area 82, and the like. The program storage area 72 stores a program executed by the control section 24. The first photography data storage area 74 stores photography data captured by the first DC unit 40. The second photography data storage area 76 stores photography data captured by the second DC unit 50. The image data storage area 80 stores image data formed by a combination of the two sets of photography data captured by the first DC unit 40 and the second DC unit 50. Further, the image data storage area 80 can store image data of another type. Detailed descriptions will be provided later in this regard.

The first DC unit 40 has an optical system 44, such as a lens, and an area image sensor 46 (hereinafter called an "AIS"). Light reflected from a target placed on the transparent plate 32 (light caused by reflection of light from the light source 60) directly enters the optical system 44. The optical system 44 forms an optical image on the AIS 46 from the incident light. The AIS 46 has a plurality of imaging elements arranged in a two-dimensional pattern (arranged so as to spread over an X-Y plane). The AIS 46 converts an optical image generated by the optical system 44 into an electrical signal. According thereto, photography data are generated. The photography data generated by the AIS 46 are stored in the first photography data storage area 74. The second DC unit 50 also has an optical system 54 and an AIS 56, as does the first DC unit 40. The photography data generated by the AIS 56 are stored in the second photography data storage area 76.

### (Modes)

The user can select one from a plurality of modes by operating the operation section 20. For example, the user can select one from an image data generation mode and a copy mode. When the image data generation mode is selected, image data are generated. When the copy mode is selected, image data are generated, and the image data are printed on a print medium. Even when either of the modes is selected, image data are generated. Processing for generating image data will be chiefly explained in the following descriptions.

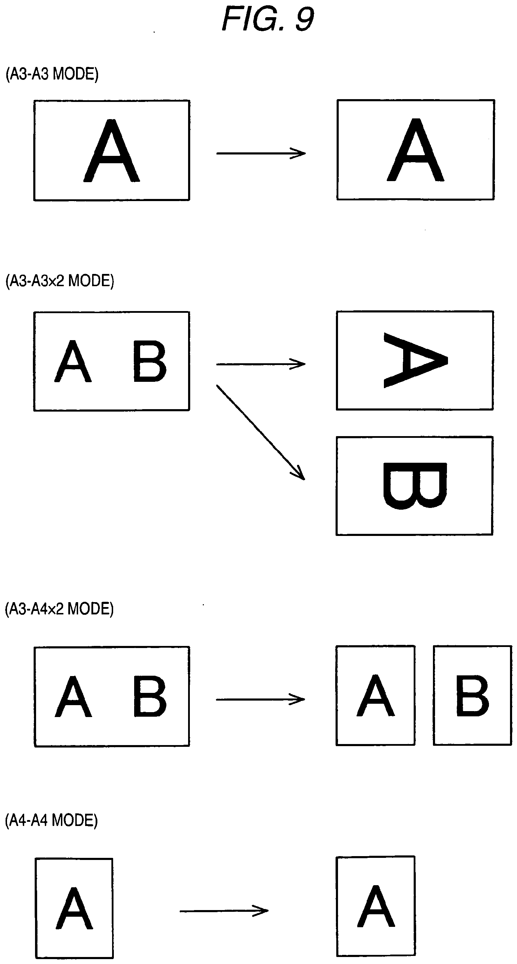

When selected the image data generation mode, the user can additionally select one from a plurality of modes. In the exemplary embodiment, the following four modes are adopted. Details of the respective modes become easy to comprehend by reference to Fig. 9. In Fig. 9, targets are shown on the left side, and image data generated from the respective targets are shown on the right side.
(1) A3-A3mode: This mode is for generating A3-size image data from an A3-size target. In the example shown in Fig. 9, A3-size image data including the letter "A" are generated from an A3-size document including the letter "A."
(2) A3-A3×2 mode: This mode is for generating two sets of A3-size image data from an A3-size target. Specifically, the present mode is for generating A3-size image data corresponding to one side of an A3-size target with respect to an intermediate position in a long side of the target and A3-size image data corresponding to the other side of the A3-size target with respect to the intermediate position in the long side of the target. In the examples shown in Fig. 9, the letter "A" is included in a left half of the A3-size document, and the letter "B" is included in a right half of the same. A3-size image data including the letter "A" in the left half of the document are generated, and A3-size image data including the letter "B" on the right half of the document are generated. The mode is effective at the time of production of image data (two sets of image data) pertaining to a document in which data equivalent of two A4-size pages are printed on an A3-size print medium. An A3-A4×2 mode which will next be described is also effective at the time of production of image data pertaining to such a document.
(3) A3-A4×2 mode: This mode is for generating two sets of A4-size image data from an A3-size target. Specifically, the present mode is for generating A4-size image data corresponding to one side of an A3-size target with respect to an intermediate position in a long side of the target and A4-size image data corresponding to the other side of the A3-size target with respect the intermediate position in the long side of the target. In the examples shown in Fig. 9, A4-size image data including the letter "A" in the left half of the document are generated, and A4-size image data including the letter "B" in the right half of the document are generated.
(4) A4-A4 mode: This mode is for generating A4-size image data from an A4-size target. In the examples shown in Fig. 9, A4-size image data including the letter "A" are generated from the A4-size document including the letter "A."

### (A3-A3 Mode Processing)

Processing performed by the control section 24 will be described. First, processing performed by the control section 24 when the A3-A3 mode is selected will be described. The user sets an A3-size document 90 (see Fig. 5) on the surface 32a of the transparent plate 32 such that a read surface (a surface whose image data are to be generated) of the document 90 faces down. As mentioned above, the exposed portion of the transparent plate 32 of the exemplary embodiment has an A3 size. Thus, when the A3-size document 90 is set, the transparent plate 32 becomes invisible. Namely, two long sides of the document 90 coincide with two long sides of the transparent plate 32, and two short sides of the document 90 coincide with two short sides of the transparent plate 32. Next, the user selects the A3-A3 mode by operating the operation section 20. According thereto, A3-A3 mode processing is initiated.

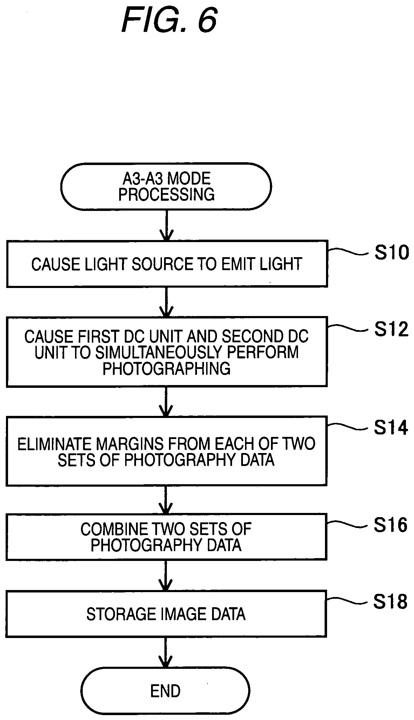

Fig. 6 shows a flowchart of A3-A3 mode processing. The control section 24 causes the light source 60 to emit light (S10). Before causing the light source 60 to emit light, the control section 24 has activated (i.e., energized) the AIS 46 and the AIS 56 in advance. Processing pertaining to S10 is performed, whereby the light originating from the light source 60 is reflected by the document 90. Reflected light enters the optical systems 44 and 54. The optical system 44 forms an optical image (an optical image in the area 42) on the AIS 46 from incident light. The optical system 54 forms an optical image (an optical image in the area 52) on the AIS 56 from incident light. The AIS 46 converts the optical image into an electrical signal, and the AIS 56 converts the optical image into an electrical signal. Specifically, the first DC unit 40 and the second DC unit 50 simultaneously perform photographing operations (S12). The control section 24 stores the photography data captured by the first DC unit 40 (hereinafter called "first photography data") in the first photography data storage area 74. The control section 24 stores the photography data captured by the second DC unit 50 (hereinafter called "second photography data") in the second photography data storage area 76.

The control section 24 eliminates margins from the second photography data as well as from the first photography data (S14). Specifically, the following processing is carried out. Values of margins to be eliminated are previously stored in the program storage area 72. Values of margins will be described by reference to Fig. 3. The program storage area 72 stores, as values of margins to be eliminated, a first distance between XL1 and XS, a second distance between XR2 and XE, a third distance between Y1 and YS, and a fourth distance between Y2 and YE.

The control section 24 cuts an area between a left end (a coordinate XL1) in the first photography data (data pertaining to the area 42 in Fig. 3, which is one example of a first side) and a position (a coordinate XS) spaced from the left end at a first distance in the positive X direction. The control section 24 cuts an area between a proximal edge (a coordinate Y1) in the first photography data and a position (a coordinate YS) spaced from the edge at a third distance in the negative Y direction (an upward direction in Fig. 3). The control section 24 cuts an area between a distal edge (a coordinate Y2) in the first photography data and a position (a coordinate YE) spaced from the edge at a fourth distance in the positive Y direction (a downward direction in Fig. 3). Margins (areas except the target) of the first photography data are thus eliminated.

The control section 24 also cuts an area between a right end (a coordinate XR2) of the second photography data (data pertaining to the area 52 in Fig. 3, which is one example of a second side) and a position (a coordinate XE) spaced from the right end at a second distance in the negative X direction. Processing for cutting the margin in the second photography data in the Y direction is analogous to processing for cutting the margin in the first photography data in the Y direction. Margins in the second photography data (areas except the target) are thus eliminated.

The control section 24 then combines the margin-eliminated first photography data with the margin-eliminated second photography data (S16). As shown in Fig. 3, a partial overlap exists between the area 42 and the area52. The control section 24 overlaps the margin-eliminated first photography data and the margin-eliminated second photography data one on top of the other. No specific limitations are imposed on a technique for combining two sets of photography data so as to partially overlap each other. Two sets of photography data can be combined together by use of various known techniques. Two sets of photography data may also be combined together by utilization of technique disclosed in JP-A-2005-79816, for example. Processing pertaining to S16 is performed, whereupon one set of A3-size image data are generated. The control section 24 stores the image data in the image data storage area 80 (S18). According thereto, A3-A3 mode processing is completed.

### (A4-A4 Mode Processing)

Subsequently, processing performed by the control section 24 at the time of selection of the A4-A4 mode will be described. The user sets the document on the surface 32a of the transparent plate 32 such that a long side of the A4-size document coincides with a left short side of the transparent plate 32 and such that two short sides of the document coincide with two long sides of the transparent plate 32. Next, the user selects the A4-A4 mode by operating the operation section 20. According thereto, A4-A4 mode processing is initiated.

The control section 24 causes the light source 60 to emit light (S30). Before causing the light source 60 to emit light, the control section 24 has activated the AIS 46 (the AIS 56 is not activated) in advance. The optical system 44 generates an optical image (an optical image falling within the range 42) on the AIS 46. According thereto, the AIS 46 converts an optical image into an electrical signal. Specifically, the first DC unit 40 performs photographing operation (S32). The control section 24 stores the photography data captured by the first DC unit 40 into the first photography data storage area 74.

Next, the control section 24 eliminates margins from the photography data (S34). The technique is analogous to that employed when the margins are eliminated from the first photography data by means of processing pertaining to S14 in Fig. 6. Next, the control section 24 eliminates a remaining portion from the margin-eliminated photography data in such a way that only the A4-size area is left (S36). Specifically, the following processing is performed.

A value of the length of the short side of theA4-size area (hereinafter called an "A4 short side length") is previously stored in the program storage area 72. The A4 short side length is determined on the basis of the resolution of the photography data generated by the DS units 40 and 50. The control section 24 takes, as a reference position, a left end (i.e., a left long side of the document: XS) in the margin-eliminated photography data, and localizes a position (XM) spaced from the reference position by the A4 short side length in the positive direction X. Next, the control section 24 cuts the photography data except the area between the reference position (XS) and the localized position (XM). Specifically, the control section 24 cuts the area between XM and XL2. Consequently, a single unit of A4-size image data is generated. The control section 24 stores the image data into the image data storage area 80 (S38). A4-A4 mode processing is now completed.

### (A3-A3×2 Mode Processing)

Subsequently, processing performed by the control section 24 at the time of selection of the A3-A3×2 mode will be described. The user sets the A3-size document 90 on the transparent plate 32. Next, the user selects the A3-A3×2 mode by operating the operation section 20. According thereto, A3-A3×2 mode processing is initiated.

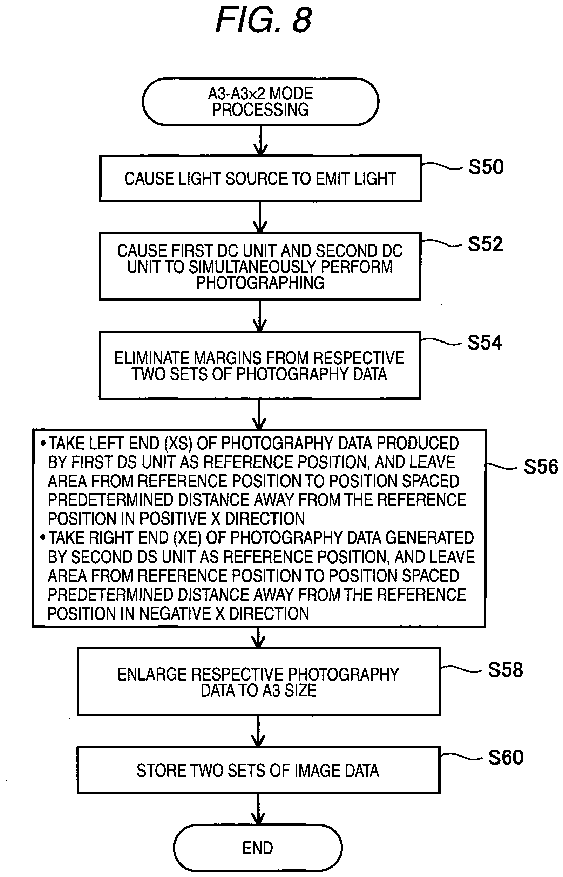

Fig. 8 is a flowchart of A3-A3×2 mode processing. S50 to S54 are analogous to S10 to S14 shown in Fig. 6. The control section 24 generates respective sets of A4-size data from the margin-eliminated first photography data and the margin-eliminated second photography data (S56). Specifically, the following processing is performed.

The control section 24 takes a left end of the margin-eliminated first photography data (i.e., a left short side of the document 90: XS, which is one example of a first short side) as a reference position (one example of a first reference position) and localizes a position (XM) spaced from the reference position at the A4 short side length (a length which is one-half the length of the long side of A3 size) in the positive X direction. Next, the control section 24 cuts the first photography data except the area between reference position (XS) and the localized position (XM). Specifically, the control section 24 cuts an area between XM and XL2. As a consequence, one set of A4-size data is generated. The control section 24 takes a right end of the margin-eliminated second photography data (i.e., a right short side of the document 90: XE, which is one example of a second short side) as a reference position (one example of a second reference position) and localizes a position (XM) spaced apart from the reference position at the A4 short side length in the negative X direction. Next, the control section 24 cuts the second photography data except the area between the reference position (XE) and the localized position (XM). Specifically, the control section 24 cuts an area between XM and XR1. Consequently, one set of A4-size data is generated.

Next, the control section 24 enlarges the two sets of data generated in S56 to A3-size data (S58) (one example of a size enlargement unit). According thereto, two sets of A3-size image data are generated. The control section 24 stores the two sets of image data into the image data storage area 80 (S60). A3-A3×2 mode processing is now completed.

The A3-A4×2 mode can be implemented by skipping processing pertaining to S58 in A3-A3×2 mode processing shown in Fig. 8. Therefore, explanations about A3-A4×2 mode processing are omitted.

In the multi-function device 10 according to the exemplary embodiment, the respective DS units 40 and 50 directly photograph the target (e.g., the document 90) without involvement of a mirror, and the like. Therefore, high-quality image data can be generated. Moreover, in the multi-function device 10, the respective DS units 40 and 50 photograph the A3-size document 90 in association with each other. Since one DS unit does not photograph the overall A3-size document 90, distances between the document 90 (the transparent plate 32) and the respective DS units 40 and 50 can be reduced. Consequently, a compact device size can be achieved. The multi-function device 10 can generate high-quality image data in a compact device size.

In the case of the A3-A3×2 mode and the A3-A4×2 mode, the multi-function device 10 can generate two sets of image data without combination of the photography data generated by the respective DS units 40 and 50. When compared with a technique for combining photography data and dividing the thus-combined data, the invention can be conceived to lessen processing load.

### (Modification to the Exemplary Embodiments)

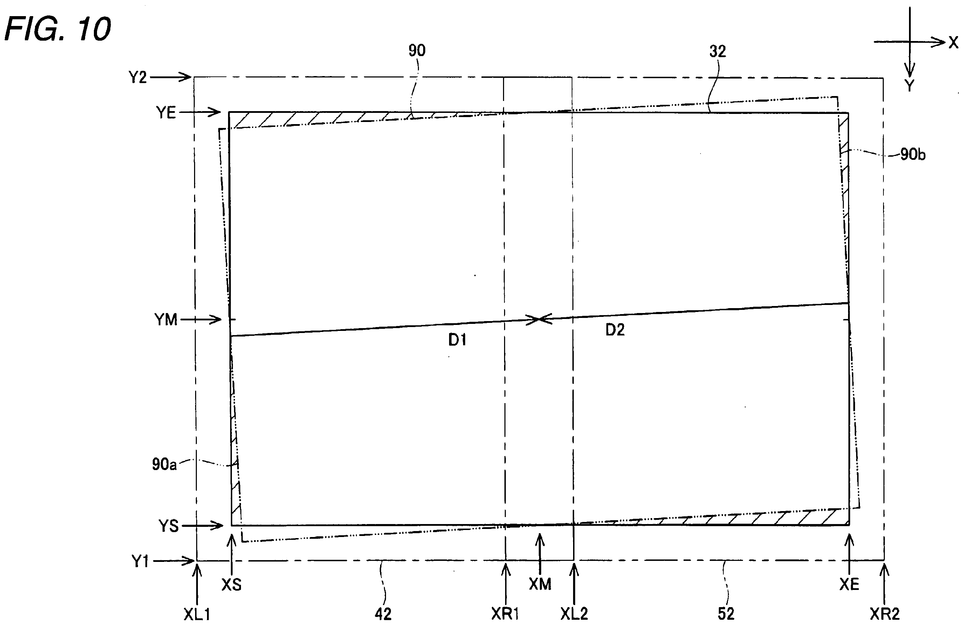

In the above-described exemplary embodiments, a predetermined distance (the first distance, and the like) is utilized at the time of removal of margins from the photography data. A, the following technique may also be adopted in addition to the above technique. For example, the back surface (a transparent-plate-32-side surface) of the cover 30 is painted in black. As shown in Fig. 10, the A3-size document 90 may be placed while remaining misaligned with respect to the transparent plate 32. Fig. 10 shows the document 90 by a three-dot chain line. In this case, the photography data respectively captured by the first DC unit 40 and the second DC unit 50 include black areas as areas of the transparent plate 32 where the document 90 is not placed (hatched areas in Fig. 10). The control section 24 localizes boundaries between the black areas and areas in color other than black so as to enable localization of a left short side 90a and a right short side 90b of the document 90. The control section 24 can localize angles of deviations of the document 90 with respect to the transparent plate 32 (directions in the photography data in which the short sides 90a and 90b extend).

When performing A3-A3×2 mode processing and A3-A4×2 mode processing, for example, the control section 24 may also perform the following processing. Specifically, the control section 24 localizes, as a reference position, the left short side 90a of the document 90 in the first photography data generated by the first DS unit 40. The control section 24 subsequently localizes a position spaced from the short side 90a at the A4 short side length in the direction of arrow D1. The direction of the arrow D1 is a direction perpendicular to the direction in which the short side 90a extends. According thereto, the control section 24 can localize an intermediate position in the long side of the document 90 in the first photography data. Therefore, the control section 24 can generate image data pertaining to an area between the left short side 90a of the document 90 and the intermediate position in the long side of the document 90. The control section 24 localizes, as a reference position, the right short side 90b of the document 90 in the second photography data generated by the second DS unit 50. Next, the control section 24 localizes a position spaced from the short side 90b at the A4 short side length in the direction of arrow D2. The direction of the arrow D2 is a direction perpendicular to the direction in which the short side 90b extends. According thereto, the control section 24 can localize an intermediate position in the long side of the document 90 in the second photography data. Therefore, the control section 24 can generate image data pertaining to an area between the right short side 90b of the document 90 and the intermediate position in the long side of the document 90. By means of the configuration, even when the document 90 is positioned while remaining misaligned with respect to the transparent plate 32, two sets of image data corresponding to separation of the document 90 along the intermediate position can be generated.

While the present invention has been shown and described with reference to certain exemplary embodiments thereof, it will be understood by those skilled in the art that various changes in form and details may be made therein without departing from the spirit and scope of the invention as defined by the appended claims. Modifications will be explained below.

The position of the light source 60 is not limited to the position described in connection with the embodiment. For example, the light source 60 may also be placed at any position, so long as the read surface of the document 90 can be exposed to light.

Further, three or more DS units may also be provided. For example, three DS units may also be positioned straight along the direction in which the long sides of the transparent plate 32 extend. For example, four DS units may also be adopted. In this case, the DS units may also be positioned at respective apexes of a rectangular when the transparent plate 32 is viewed from above. In this case, when two DS units are positioned on the left and when two DS units are positioned on the right, A3-A3×2 processing and A3-A4×2 processing may also be performed as below. Specifically, the left two DS units photograph a left-side area of an A3-size document. By combining two sets of photography data generated by the two left DS units together, the first photography data of the above-described exemplary embodiments is generated. The respective two right DS units photograph a right-side area of the A3-size document. By combining two sets of photography data generated by the two right DS units together, the second photography data of the above-described exemplary embodiments is generated. Subsequent processing is analogous to that described in connection with the above-described exemplary embodiments.

Technical elements described in connection with the specification or the drawings exhibit alone or in combination technical usefulness, and the combinations are not limited to those described in filed claims. The technique illustrated in the specification or the drawings simultaneously achieves a plurality of objectives, and exhibits technical usefulness by attaining any one of the objectives.

As discussed above, the invention can provide at least the following illustrative, non-limiting embodiments.

There are occasions where separate generation of image data pertaining to one side and image data pertaining to the other side with respect to an intermediate position in a long side of a rectangular target of predetermined size is desired. For example, an A3 size is built from two A4 sizes. When a print medium in which data equivalent of two A4-size pages are printed in one A3-size page is a target, there are cases where generation of two sets of A4-size image data from the target is requested. After combining a plurality of sets of photography data and generating one set of image data pertaining to the target and the image data are subsequently separated, image data pertaining to one side and image data pertaining to the other side with respect to an intermediate position in a long side of the target can be separately generated. In this case, since there is a necessity for combining photography data and separating the combined photography data, processing load is heavy. In order to generate the two sets of image data without combination of photography data, the following aspects may also be adopted.

According to another aspect of the invention, in the image data generating device, wherein the plurality of digital camera units comprises: a first digital camera unit that generates a first photography data of the target, the first photography data including an entire area of a first side of the target with respect to an intermediate position in a long side of the target when the rectangular target having a predetermined size is set at a predetermined position on the transparent plate; and a second digital camera unit that generates a second photography data of the target, the second photography data including an entire area of a second side of the target with respect to the intermediate position in the long side of the target and being different from the first photography data if the rectangular target having the predetermined size is set at the predetermined position on the transparent plate, and wherein the image data generating device further comprises: a first image data generation unit that generates a first image data pertaining to the first side of the rectangular target using the first photography data; and a second image data generation unit that generates a second image data pertaining to the second side of the rectangular target using the second photography data.

This aspect enables separate generation of the image data pertaining to one side (i.e., the first image data pertaining to the first side) and the image data pertaining to the other side (i.e., the second image data pertaining to the second side) with respect to the intermediate position in the long side of the rectangular target of predetermined size. Moreover, there is obviated a necessity for combining photography data.

According to still another aspect of the invention, in the image data generating device, wherein the first image data generation unit generates, if a first short side of the rectangular target included in the first photography data is taken as a first reference position, the first image data including only a first area between the first reference position and a position spaced a predetermined distance apart from the first reference position toward the second short side, wherein the second image data generation unit generates, if the second short side of the rectangular target included in the second photography data is taken as a second reference position, the second image data including only a second area between the second reference position and a position spaced the predetermined distance apart from the second reference position toward the first short side, and wherein the predetermined distance is set to one-half a length of the long side of the rectangular target of the predetermined size.

Incidentally, a technique for the first image data generation unit localizing the reference position (first short side of the target) may not be limited. For example, in a case where an end of the photography data coincide with a first short side of a target when the target is set at a predetermined position on the transparent plate, the end of the photography data may also be localized as a reference position. Moreover, when photography data including an external range exceeding the first short side of the target are generated, a position interiorly spaced a predetermined value apart from the end of the photography data may also be localized as a reference position. Moreover, when a member covering the target set on the transparent plate has a cover surface in predetermined color, the position of first short side of the target in photography data can be localized by determining boundaries between the area in predetermined color and areas in another color. In the case of a configuration in which the position of first short side of the target can be accurately localized as mentioned above, the technique for generating image data by means of taking the first short side as a referencepositionbecomes particularly effective. Specifically, even when the target is placed while remaining displaced from a previously-determined position (the predetermined position), an intermediate position in the long side of the target can be localized by taking first short side of the target as a reference position. Accordingly, image data pertaining to an area between the first short side and the intermediate position of the long side of the target can be generated. The second image data generation unit can also localize a reference position (second short side of the target) by utilization of various techniques, as in the case with the first image data generation unit.

According to still another aspect of the invention, the image data generating device further comprises: a size enlargement unit that enlarges the first image data generated by the first image data generation unit and the second image data generated by the second image data generation unit to the predetermined size, respectively.

According thereto, two sets of A4-size image data are generated from an A3-size target, and respective A3-size image data can be subsequently generated from the respective A4-size image data.

According to still another aspect of the invention, the image data generating device further comprises: a mode selection unit that allows selection of a mode, wherein, if a first mode is selected, the photography data composition unit combines the first photography data with the second photography data and generates image data pertaining to the rectangular target having the predetermined size, and wherein, if a second mode is selected, the first image data generation unit generates the first image data pertaining to the first side of the rectangular target having the predetermined size, and the second image data generation unit generates the second image data pertaining to the second side of the rectangular target having the predetermined size.

This aspect enables generation of image data in compliance with the user's intention.

## Claims

1. An image data generating device for generating image data pertaining to a target, comprising:
a transparent plate (32) having a first surface on which the target is to be set and a second surface that is an opposite side of the first surface;
a light radiation unit (60) that is configured to radiate light to the target;
a plurality of digital camera units (40, 50) which are provided on a side close to the second surface of the transparent plate (32) and which are offset from each other and overlap the transparent plate (32) as viewed from a direction perpendicular to a plane in which the transparent plate (32) extends; and
a data composition unit (80);
wherein the plurality of digital camera units (40, 50) comprise: a first digital camera unit (40) that is configured to generate a first data of the target, the first data including a first side of the target with respect to an intermediate position in a long side of the target when the rectangular target having a predetermined size is set at a predetermined position on the transparent plate; and a second digital camera unit (50) that is configured to generate a second data of the target, the second data including a second side of the target with respect to the intermediate position in the long side of the target and being different from the first data if the rectangular target having the predetermined size is set at the predetermined position on the transparent plate,
wherein the image data generating device further comprises: a first image data generation unit (74) that is configured to generate a first image data pertaining to the first side of the rectangular target using the first data; and a second image data generation unit (76) that is configured to generate a second image data pertaining to the second side of the rectangular target using the second data,
wherein the light radiated by the light radiation unit (60) and reflected from the target directly enters the plurality of digital camera units (40, 50);
wherein the data composition unit (80) is configured to combine plural sets of data generated by the plurality of digital camera units (40, 50) and to generate image data pertaining to the target,
wherein two adjacent digital camera units (40, 50) are configured to generate partially-overlapping data, **characterised in that**:
each digital camera unit (40, 50) has an optical system (44, 54) and an area image sensor (46, 56) with a plurality of imaging elements arranged in a two-dimensional pattern, the optical system (44, 54) forming an optical image in an area (42, 54) on the area image sensor (46, 56) from an incident light;
each of the digital camera units (40, 50) generates photography data by photographing the target;
the first data of the target is first photography data including an entire area of the first side of the target and the second data of the target is second photography data including an entire area of the second side of the target;
the first image data generation unit (74) generates the first image data using the first photography data and the second image data generation unit (76) generates the second image data using the second photography data;
the data composition unit (80) is a photography data composition unit (80) configured to combine plural sets of photography data; and
two adjacent digital camera units (40, 50) are configured to generate partially-overlapping photography data;
wherein the image data generating device further comprises a mode selection unit (20) that is configured to allow selection of a mode;
wherein, if a first mode is selected, the photography data composition unit combines the first photography data with the second photography data and generates image data pertaining to the rectangular target having the predetermined size;
wherein, if a second mode is selected, the first image data generation unit generates the first image data pertaining to the first side of the rectangular target having the predetermined size, and the second image data generation unit generates the second image data pertaining to the second side of the rectangular target having the predetermined size;
wherein the first image data generation unit (74) is configured to generate, if a first short side of the rectangular target included in the first photography data is taken as a first reference position, the first image data including only a first area between the first reference position and a position spaced a predetermined distance apart from the first reference position toward a second short side,
wherein the second image data generation unit is (76) configured to generate, if the second short side of the rectangular target included in the second photography data is taken as a second reference position, the second image data including only a second area between the second reference position and a position spaced the predetermined distance apart from the second reference position toward the first short side; and
wherein the predetermined distance is set to one-half a length of the long side of the rectangular target of the predetermined size.

2. The image data generating device according to claim 1, further comprising:
a size enlargement unit that is configured to enlarge the first image data generated by the first image data generation unit and the second image data generated by the second image data generation unit to the predetermined size, respectively.

## Patentansprüche

1. Bilddatenerzeugungsvorrichtung zum Erzeugen von Bilddaten bezüglich eines Zieles, mit:
einer transparenten Platte (32), die eine erste Fläche, an der das Ziel anzuordnen ist, und eine zweite Fläche hat, die der ersten Fläche entgegengesetzt ist;
einer Lichtausstrahlungseinheit (60), die dazu konfiguriert ist, Licht zu dem Ziel auszustrahlen;
vielen Digitalkameraeinheiten (40, 50), die an einer Seite nahe der zweiten Fläche der transparenten Platte (32) vorgesehen und voneinander versetzt sind, und die die transparente Platte (32) bei Betrachtung von einer Richtung überlappen, die senkrecht zu einer Ebene ist, in der sich die transparente Platte (32) erstreckt; und
einer Datenzusammensetzungseinheit (80);
wobei die vielen Digitalkameraeinheiten (40, 50) Folgendes aufweisen: eine erste Digitalkameraeinheit (40), die dazu konfiguriert ist, erste Daten des Zieles zu erzeugen, wobei die ersten Daten eine erste Seite des Zieles hinsichtlich einer Zwischenposition in einer Langseite des Zieles beinhalten, wenn das rechteckige Ziel mit einer vorbestimmten Größe an einer vorbestimmten Position an der transparenten Platte angeordnet ist; und eine zweite Digitalkameraeinheit (50), die dazu konfiguriert ist, zweite Daten des Zieles zu erzeugen, wobei die zweiten Daten eine zweite Seite des Zieles hinsichtlich der Zwischenposition in der Langeseite des Zieles beinhalten und sich von den ersten Daten unterscheiden, falls das rechteckige Ziel mit der vorbestimmten Größe an der vorbestimmten Position an der transparenten Platte angeordnet ist,
wobei die Bilddatenerzeugungsvorrichtung des Weiteren Folgendes aufweist: eine erste Bilddatenerzeugungseinheit (74), die dazu konfiguriert ist, erste Bilddaten bezüglich der ersten Seite des rechteckigen Zieles unter Verwendung der ersten Daten zu erzeugen; und eine zweite Bilddatenerzeugungseinheit (76), die dazu konfiguriert ist, zweite Bilddaten bezüglich der zweiten Seite des rechteckigen Zieles unter Verwendung der zweiten Daten zu erzeugen,
wobei das durch die Lichtausstrahlungseinheit (60) ausgestrahlte und von dem Ziel reflektierte Licht direkt in die vielen Digitalkameraeinheiten (40, 50) eintritt;
wobei die Datenzusammensetzungseinheit (80) dazu konfiguriert ist, viele Datensätze zu kombinieren, die durch die vielen Digitalkameraeinheiten (40, 50) erzeugt sind, und Bilddaten bezüglich des Zieles zu erzeugen,
wobei zwei angrenzende Digitalkameraeinheiten (40, 50) dazu konfiguriert sind, sich teilweise überlappende Daten zu erzeugen, **dadurch gekennzeichnet, dass**:
jede Digitalkameraeinheit (40, 50) ein optisches System (44, 54) und einen Bereichsbildsensor (46, 56) mit vielen Abbildungselementen hat, die in einem zweidimensionalen Muster angeordnet sind, wobei das optische System (44, 54) ein optisches Bild in einem Bereich (42, 54) an dem Bereichsbildsensor (46, 56) aus einfallendem Licht erzeugt;
wobei jede Digitalkameraeinheit (40, 50) Fotodaten durch Fotografieren des Zieles erzeugt;
wobei die ersten Daten des Zieles erste Fotodaten einschließlich eines gesamten Bereiches der ersten Seite des Zieles und die zweiten Daten des Zieles zweite Fotodaten einschließlich eines gesamten Bereiches der zweiten Seite des Zieles sind;
wobei die erste Bilddatenerzeugungseinheit (74) die ersten Bilddaten unter Verwendung der ersten Fotodaten erzeugt und die zweite Bilddatenerzeugungseinheit (76) die zweiten Bilddaten unter Verwendung der zweiten Fotodaten erzeugt;
wobei die Datenzusammensetzungseinheit (80) eine Fotodatenzusammensetzungseinheit (80) ist, die dazu konfiguriert ist, viele Fotodatensätze zu kombinieren; und
wobei zwei angrenzende Digitalkameraeinheiten (40, 50) dazu konfiguriert sind, sich teilweise überlappende Fotodaten zu erzeugen;
wobei die Bilddatenerzeugungsvorrichtung des Weiteren eine Modusauswahleinheit (20) aufweist, die dazu konfiguriert ist, eine Auswahl eines Modus' zu erlauben;
wobei, falls ein erster Modus ausgewählt ist, die Fotodatenzusammensetzungseinheit die ersten Fotodaten mit den zweiten Fotodaten kombiniert und Bilddaten bezüglich des rechteckigen Zieles erzeugt, das die vorbestimmte Größe hat;
wobei, falls ein zweiter Modus ausgewählt ist, die erste Bilddatenerzeugungseinheit die ersten Bilddaten bezüglich der ersten Seite des rechteckigen Zieles erzeugt, das die vorbestimmte Größe hat, und wobei die zweite Bilddatenerzeugungseinheit die zweiten Bilddaten bezüglich der zweiten Seite des rechteckigen Zieles erzeugt, das die vorbestimmte Größe hat;
wobei die erste Bilddatenerzeugungseinheit (74) dazu konfiguriert ist, falls eine erste Kurzseite des rechteckigen Zieles, das in den ersten Fotodaten enthalten ist, als eine erste Referenzposition angenommen wird, die ersten Bilddaten einschließlich nur eines ersten Bereiches zwischen der ersten Referenzposition und einer Position zu erzeugen, die in einem vorbestimmten Abstand von der ersten Referenzposition zu einer zweiten Kurzseite entfernt ist,
wobei die zweite Bilddatenerzeugungseinheit (76) dazu konfiguriert ist, falls die zweite Kurzseite des rechteckigen Zieles, das in den zweiten Fotodaten enthalten ist, als eine zweite Referenzposition angenommen ist, die zweiten Bilddaten einschließlich nur eines zweiten Bereiches zwischen der zweiten Referenzposition und einer Position zu erzeugen, die in dem vorbestimmten Abstand von der zweiten Referenzposition zu der ersten Kurzseite entfernt ist; und
wobei der vorbestimmte Abstand auf eine halbe Länge der Langseite des rechteckigen Zieles der vorbestimmten Größe eingestellt ist.

2. Bilddatenerzeugungsvorrichtung gemäß Anspruch 1, des Weiteren mit:
einer Größenvergrößerungseinheit, die dazu konfiguriert ist, die ersten Bilddaten, die durch die erste Bilddatenerzeugungseinheit erzeugt sind, und die zweiten Bilddaten, die durch die zweite Bilddatenerzeugungseinheit erzeugt sind, jeweils auf die vorbestimmte Größe zu vergrößern.

## Revendications

1. Dispositif de génération de données d'image pour générer des données d'image relatives à une cible, comprenant :
une plaque transparente (32) ayant une première surface sur laquelle la cible doit être placée et une deuxième surface qui est un côté opposé de la première surface ;
une unité de rayonnement de lumière (60) qui est configurée pour rayonner de la lumière vers la cible ;
une pluralité d'unités de caméra numérique (40, 50) qui sont disposées sur un côté proche de la deuxième surface de la plaque transparente (32) et qui sont décalées l'une de l'autre et chevauchent la plaque transparente (32) comme observé à partir d'une direction perpendiculaire à un plan dans lequel la plaque transparente (32) s'étend ; et
une unité de composition de données (80) ;
dans lequel la pluralité d'unités de caméra numérique (40, 50) comprend : une première unité de caméra numérique (40) qui est configurée pour générer une première donnée de la cible, la première donnée comprenant un premier côté de la cible par rapport à une position intermédiaire dans un côté long de la cible quand la cible rectangulaire ayant une taille prédéterminée est placée dans une position prédéterminée sur la plaque transparente ; et une deuxième unité de caméra numérique (50) qui est configurée pour générer une deuxième donnée de la cible, la deuxième donnée comprenant un deuxième côté de la cible par rapport à la position intermédiaire dans le côté long de la cible et étant différente de la première donnée si la cible rectangulaire ayant la taille prédéterminée est placée dans la position prédéterminée sur la plaque transparente,
dans lequel le dispositif de génération de données d'image comprend en outre : une première unité de génération de données d'image (74) qui est configurée pour générer une première donnée d'image relative au premier côté de la cible rectangulaire en utilisant la première donnée ; et une deuxième unité de génération de données d'image (76) qui est configurée pour générer une deuxième donnée d'image relative au deuxième côté de la cible rectangulaire en utilisant la deuxième donnée,
dans lequel la lumière rayonnée par l'unité de rayonnement de lumière (60) et réfléchie à partir de la cible entre directement dans la pluralité d'unités de caméra numérique (40, 50) ;
dans lequel l'unité de composition de données (80) est configurée pour combiner plusieurs ensembles de données générées par la pluralité d'unités de caméra numérique (40, 50) et pour générer des données d'image relatives à la cible,
dans lequel deux unités de caméra numérique adjacentes (40, 50) sont configurées pour générer des données partiellement chevauchantes, **caractérisé en ce que** :
chaque unité de caméra numérique (40, 50) a un système optique (44, 54) et un capteur d'image de zone (46, 56) avec une pluralité d'éléments d'imagerie agencés dans un modèle bidimensionnel, le système optique (44, 54) formant une image optique dans une zone (42, 54) sur le capteur d'image de zone (46, 56) à partir d'une lumière incidente ;
chacune des unités de caméra numérique (40, 50) génère des données de photographie en photographiant la cible ;
la première donnée de la cible est une première donnée de photographie comprenant une zone entière du premier côté de la cible et la deuxième donnée de la cible est une deuxième donnée de photographie comprenant une zone entière du deuxième côté de la cible ;
la première unité de génération de données d'image (74) génère la première donnée d'image en utilisant la première donnée de photographie et la deuxième unité de génération de données d'image (76) génère la deuxième donnée d'image en utilisant la deuxième donnée de photographie ;
l'unité de composition de données (80) est une unité de composition de données de photographie (80) configurée pour combiner plusieurs ensembles de données de photographie ; et
deux unités de caméra numérique adjacentes (40, 50) sont configurées pour générer des données de photographie partiellement chevauchantes ;
dans lequel le dispositif de génération de données d'image comprend en outre une unité de sélection de mode (20) qui est configurée pour permettre la sélection d'un mode ;
dans lequel, si un premier mode est sélectionné, l'unité de composition de données de photographie combine la première donnée de photographie avec la deuxième donnée de photographie et génère des données d'image relatives à la cible rectangulaire ayant la taille prédéterminée ;
dans lequel, si un deuxième mode est sélectionné, la première unité de génération de données d'image génère la première donnée d'image relative au premier côté de la cible rectangulaire ayant la taille prédéterminée, et la deuxième unité de génération de données d'image génère la deuxième donnée d'image relative au deuxième côté de la cible rectangulaire ayant la taille prédéterminée ;
dans lequel la première unité de génération de données d'image (74) est configurée pour générer, si un premier côté court de la cible rectangulaire compris dans la première donnée de photographie est pris comme une première position de référence, la première donnée d'image comprenant seulement une première zone entre la première position de référence et une position espacée de la première position de référence d'une distance prédéterminée vers un deuxième côté court,
dans lequel la deuxième unité de génération de données d'image (76) est configurée pour générer, si le deuxième côté court de la cible rectangulaire compris dans la deuxième donnée de photographie est pris comme une deuxième position de référence, la deuxième donnée d'image comprenant seulement une deuxième zone entre la deuxième position de référence et une position espacée de la deuxième position de référence de la distance prédéterminée vers le premier côté court ; et
dans lequel la distance prédéterminée est fixée à la moitié d'une longueur du côté long de la cible rectangulaire de la taille prédéterminée.

2. Dispositif de génération de données d'image selon la revendication 1, comprenant en outre :
une unité d'agrandissement de taille qui est configurée pour agrandir respectivement la première donnée d'image générée par la première unité de génération de données d'image et la deuxième donnée d'image générée par la deuxième unité de génération de données d'image à la taille prédéterminée.
